# FASCICULE DE BREVET EUROPEEN

(11) **EP 4 652 435 B1**
(45) Date de publication et mention de la délivrance du brevet: **14.10.2026**
(21) Numéro de dépôt: 24703066.1
(22) Date de dépôt: 09.01.2024
(51) Int. Cl.: G01H 11/06, G01P 15/125, G01P 15/18

(54) **DISPOSITIF MEMS DE DETECTION DE VIBRATION**
MEMS-SCHWINGUNGSDETEKTIONSVORRICHTUNG
MEMS VIBRATION DETECTION DEVICE

(30) Priorité: 16.01.2023 FR 2300405
(43) Date de publication de la demande: 26.11.2025
(73) Titulaire: Tronic's Microsystems, 38920 Crolles (FR)
(72) Inventeur: FILIPE, Antoine, 38700 CORENC (FR); GIGAN, Olivier, 38000 GRENOBLE (FR); PAPIN, Guillaume, 38570 LE CHEYLAS (FR); COLLET, Joël, 38410 SAINT MARTIN D'URIAGE (FR)
(74) Mandataire: Ipsilon
(86) Numéro de dépôt international: PCT/FR2024/050021
(87) Numéro de publication internationale: WO 2024/153875

(56) Documents cités:
- WO-A1-2013/104827
- GB-A- 2 523 320

## Description

### Domaine technique

L'invention se rapporte au domaine des MEMS (« microelectromechanical systems » en anglais, ou « système micro-électromécanique » en français). L'invention concerne plus particulièrement un dispositif micro-électromécanique à peignes interdigités réalisés dans un substrat, pour la détection de vibrations dans le plan parallèle au substrat, par mesure capacitive différentielle.

### Technique antérieure

La détection de vibrations peut être obtenue au moyen de systèmes mettant en œuvre des composants piézoélectriques, tel qu'un accéléromètre piézoélectrique. En effet, ce type de système piézoélectrique présente globalement l'avantage d'être utilisable sur une gamme de fréquence très large avec une grande plage dynamique. Ce type de système est bien adapté pour la détection d'accélération pouvant atteindre 500 g (1 g = 9,81 m.s⁻²) sur une gamme de fréquence de 20 kHz, et est donc adapté pour la détection de vibrations. Un tel système piézoélectrique est par exemple décrit dans le document WO9212543. Néanmoins, ce type de capteur est, de par son principe, sensible aux contraintes mécaniques et ses caractéristiques ont donc tendance à se dégrader dans le temps, nécessitant des recalibrations régulières.

La détection de vibrations peut également être obtenue au moyen de systèmes capacitifs fondés sur la technologie MEMS mettant en œuvre la mesure de la variation capacitive entre des doigts d'un peigne fixe et les doigts d'un peigne mobile couplé à une masse mobile, dite masse d'épreuve. En pratique, la masse mobile se présente sous la forme d'une plaque couplée à des ressorts et est dimensionnée pour être sensible au déplacement du corps auquel le système est rapporté. La masse mobile s'étend généralement dans l'axe sensible de détection, et les doigts du peigne mobile s'étendent latéralement de la masse mobile et sont interdigités avec ceux du peigne fixe. Les doigts des peignes fixes et mobiles forment ainsi des électrodes.

Ces dispositifs MEMS à base de silicium présentent de nombreux avantages pour les applications industrielles. En effet, comparés aux capteurs piézoélectriques qui sont plus massifs, les capteurs MEMS peuvent être fabriqués collectivement sur une plaque de silicium en grand volume à coût réduit et présentent un encombrement réduit comparé aux dispositifs piézoélectriques. Cependant, du fait de leur architecture, de tels systèmes MEMS ne sont généralement adaptés que pour des gammes de fréquence allant jusqu'à quelques kHz, par exemple 2 kHz, ce qui n'est pas suffisant pour couvrir la plage d'amplitude de vibrations requise pour surveiller l'état d'une machine industrielle par exemple.

De plus, afin de rejeter les variations liées à l'environnement (thermique, stress mécanique) la configuration en mode différentiel est généralement privilégiée, c'est-à-dire que le système intègre deux peignes fixes dont les doigts sont interdigités avec ceux du peigne mobile de manière que, lors d'un déplacement de la masse mobile, les électrodes du peigne mobile se rapprochent des électrodes de l'un des peignes fixes, tout en s'éloignant des électrodes de l'autre peigne fixe. En d'autres termes, la capacité augmente entre les électrodes du peigne mobile et un premier peigne fixe, et la capacité diminue entre le peigne mobile et un second peigne fixe. Cette différence de variation de capacité est mesurée et convertie en un signal électrique représentatif de l'accélération à laquelle le système est exposé. Un tel système MEMS est par exemple présenté dans le document EP0605303.

Or, lors de la fabrication de ces dispositif MEMS dans une plaque de silicium (wafer), la plaque de silicium va généralement subir des déformations, notamment à cause des contraintes liées aux matériaux déposés et aux gravures. Cette planéité non-homogène du wafer génère des variations dimensionnelles entre les doigts et induit une différence (offset) dans les capacités mesurées au repos, en fonction du positionnement des électrodes fixes et mobiles sur la plaque de silicium. Ainsi, plus cette variation dimensionnelle est importante et plus l'offset capacitif associé est important.

Pour pallier ce problème, une première approche consiste à alterner localement les électrodes positives et négatives, et notamment à positionner chaque doigt du peigne mobile entre un doigt d'un peigne fixe (électrode positive) et un doigt d'un autre peigne fixe (électrode négative). Une telle configuration est par exemple décrite dans le brevet US6386032. Malheureusement, cette approche complexifie le procédé de fabrication puisqu'elle nécessite une reprise de contact additionnel pour assurer la connexion électrique des différents doigts, ce qui tend à augmenter le coût de fabrication.

D'autres exemples de capteurs capacitifs sont présentés dans les documents GB2523320A et WO2013/104827A1.

### Exposé de l'invention

Dans ce contexte, la présente invention a pour but de proposer une architecture alternative pour un dispositif micro-électromécanique MEMS à peignes interdigités pour la détection de vibrations dans le plan du substrat dans lequel est réalisé le dispositif.

L'invention vise notamment à proposer une architecture tendant à réduire les dimensions du dispositif MEMS tout en maintenant une variation capacitive efficace.

L'invention vise également à proposer une architecture qui permette de compenser et donc de limiter l'impact des imperfections ou des déformations induites lors de la fabrication explicitées ci-avant, et à proposer un dispositif MEMS qui soit avantageusement adapté pour la détection haute fréquence.

L'invention a ainsi pour objet un dispositif micro-électromécanique (MEMS) de détection de vibration suivant un axe sensible S tel que défini à la revendication 1 , par mesure capacitive différentielle. Le dispositif MEMS comprend une matrice de cellules actives réparties dans un plan actif parallèle à l'axe sensible S. Cette matrice est formée d'un nombre *i* de cellules actives dites positives et d'un nombre *i* de cellules actives dites négatives, *i* étant un nombre pair. Chacune des cellules actives positives et négatives est formée d'au moins un peigne mobile et d'au moins un peigne fixe. Les doigts du peigne fixe et les doigts du peigne mobile forment respectivement des électrodes fixes et mobiles, s'étendent dans le plan actif perpendiculairement à l'axe sensible S, et sont interdigités. Les peignes mobiles de toutes les cellules actives positives et négatives se déplacent simultanément dans une même direction sensiblement parallèle à l'axe sensible S en réponse à un déplacement, notamment de type accélération ou vibration, appliqué au dispositif MEMS, induisant une première valeur capacitive C1 entre des électrodes fixes et mobiles adjacentes dans chaque cellule active positive, et une deuxième valeur capacitive C2 entre des électrodes fixes et mobiles adjacentes dans chaque cellule active négative, la différence entre ces valeurs capacitives C1 et C2 étant représentative du déplacement appliqué au dispositif MEMS.

En d'autres termes, contrairement aux accéléromètres MEMS à détection capacitive différentielle de l'art antérieur dans lesquels un même doigt mobile est couplé à deux doigts adjacents de deux peignes fixes distincts, la présente invention propose de coupler chaque peigne fixe avec un peigne mobile distinct de manière à former des cellules capacitives actives, et de répartir ces cellules actives en matrice sur le wafer. En particulier, les peignes fixes et mobiles des cellules capacitives sont interdigités de sorte que, lors d'un déplacement des peignes mobiles suivant l'axe sensible :
- dans certaines des cellules capacitives, les électrodes mobiles s'éloignent des électrodes fixes dans la direction de déplacement ; et
- dans certaines autres cellules capacitives, les électrodes mobiles se rapprochent des électrodes fixes dans la direction de déplacement, dans les mêmes proportions.

On peut donc distinguer dans cette matrice de cellules capacitives, des cellules dites positives (pour lesquelles les doigts sont utilisés comme électrodes positives lors de la mesure de capacité) et des cellules dites négatives (pour lesquelles les doigts sont utilisés comme électrodes négatives pour la mesure de capacité), selon que les doigts mobiles s'éloignent ou se rapprochent des doigts fixes pour un déplacement des peignes mobiles dans une direction donnée. Ainsi, sur le même principe que pour les accéléromètres MEMS à capacité différentielle de l'art antérieur, la différence des capacités entre les différentes cellules positives et négatives, est représentative du déplacement subi par le corps auquel le dispositif MEMS est rapporté.

La topologie consistant à répartir des cellules actives positives et négatives en matrice ou en réseau permet d'éviter les reprises de contact rendues nécessaire dans les solutions de l'art antérieur. En outre, cette répartition en matrice permet également de minimiser l'impact des variations dimensionnelles entre des électrodes positives et négatives, dues au process de fabrication.

Par ailleurs, on remarquera que le dispositif MEMS de détection de l'invention ne nécessite pas de masse d'épreuve dédiée, les masses propres des peignes mobiles jouant le rôle de masse sensible. Cette configuration permet d'augmenter la surface active pour la détection.

Ainsi, contrairement aux accéléromètre MEMS classiques de l'art antérieur dont l'architecture est essentiellement adaptée pour la mesure dans une bande passante typique de 2 kHz, le dispositif MEMS de l'invention permet de réaliser des capteurs de vibration capables de détecter des vibrations dans une bande passante beaucoup plus élevée, par exemple supérieure ou égale à 10 kHz.

Chaque cellule active positive et négative comprend une poutre centrale fixe s'étendant dans la direction de l'axe sensible S, et positionnée dans un cadre qui est mobile par rapport à la poutre centrale, les doigts du peigne fixe s'étendant latéralement de part et d'autre de cette poutre centrale, et les doigts du peigne mobile s'étendant du cadre mobile.

La poutre fixe présente un axe central qui s'étend parallèlement à l'axe sensible S. En pratique, la disposition des doigts fixes et des doigts mobiles de part et d'autre de la poutre centrale peut être symétrique par rapport à l'axe central de la poutre, mais cette symétrie n'est bien entendue pas obligatoire.

Les doigts des peignes mobiles de deux cellules actives adjacentes suivant un axe W qui s'étend dans le plan actif et qui est perpendiculaire à l'axe sensible S, s'étendent d'une même partie latérale du cadre mobile. Cette configuration offre notamment l'avantage d'optimiser la surface occupée par les supports des doigts mobiles, tout en garantissant que la masse propre des peignes mobiles reste sensible par rapport à l'amplitude des déplacements à mesurer ou détecter.

Les cellules actives positives et négatives sont de préférence réparties en une matrice de *jxj* cellules actives, j étant un nombre pair, et il y a autant de cellules actives positives et négatives tant sur les lignes de la matrice que sur les colonnes de la matrice.

En pratique, les cellules actives positives et négatives sont préférentiellement réparties de manière à former une structure (ou matrice) centrosymétrique. Une telle configuration permet d'annuler l'offset capacitif au repos, quelles que soient les variations dimensionnelles entre les électrodes résultant des déformations du wafer lors du procédé de fabrication.

Ainsi, dans une variante, les lignes et les colonnes de la matrice peuvent présenter une alternance de cellules actives positives et de cellules actives négatives.

Dans une autre variante, les lignes et les colonnes de la matrice peuvent présenter une alternance de sous-matrices de *lxl* cellules actives positives et de sous-matrices de *lxl* cellules actives négatives, *l* étant un nombre pair. En d'autres termes, chaque sous-matrice de cellules actives positives est formée de *l*² de cellules actives positives et chaque sous-matrice de cellules actives négatives est formée de *l*² de cellules actives négatives.

L'invention a également pour objet un système de détection sensible deux axes, par exemple adapté pour la détection suivant deux axes X et Y d'un référentiel galiléen, comprenant au moins deux dispositifs MEMS de détection de vibration suivant un axe sensible S, chaque dispositif MEMS de détection étant tel que décrit ci-avant. L'axe sensible S de l'un des dispositifs MEMS de détection étant perpendiculaire à l'axe sensible S de l'autre dispositif MEMS de détection. En d'autres termes, l'axe sensible S de l'un des dispositifs MEMS de détection est destiné à être positionné parallèlement à un premier axe X du référentiel, et l'axe sensible S de l'autre dispositif MEMS de détection est destiné à être positionné parallèlement au deuxième axe Y du référentiel.

Le système de détection peut ainsi comprendre une pluralité de dispositifs MEMS de détection de vibration tels que décrit ci-avant, les axes sensibles d'un premier ensemble de dispositifs MEMS de détection étant positionnés perpendiculairement aux axes sensibles d'un deuxième ensemble de dispositifs MEMS de détection. En d'autres termes, le système de détection peut comprendre une pluralité de dispositifs MEMS de détection de vibration d'axe sensible suivant le premier axe X du référentiel et une pluralité de dispositifs MEMS de détection d'axe sensible suivant le deuxième axe Y du référentiel.

L'ensemble des dispositifs MEMS de détection peuvent être répartis sur une même puce. En pratique, et sur le même principe de répartition en matrice explicité ci-avant, les différents dispositifs MEMS de détection du système peuvent être répartis en matrice et/ou en sous-matrices sur la puce. En outre, deux dispositifs MEMS adjacents peuvent également partager une même portion de cadre.

### Brève description des dessins

D'autres caractéristiques et avantages de l'invention ressortiront clairement de la description qui en est faite ci-après, à titre indicatif et nullement limitatif, en référence aux figures annexées, dans lesquelles :
- la figure 1 est une représentation schématique d'un capteur MEMS selon un mode de réalisation, formé d'une matrice 4x4 de cellules actives ;
- la figure 2 est une représentation schématique d'une cellule active du capteur MEMS de la figure 1 ;
- la figure 3 est une vue de la zone A identifiée sur la figure 2 ;
- la figure 4 est une vue de la zone B identifiée sur la figure 1 ;
- la figure 5 est un exemple de disposition en matrice des cellules actives positives et négatives, selon un mode de réalisation ;
- la figure 6 est un exemple de disposition en matrice des cellules actives positives et négatives, selon un autre mode de réalisation ;
- la figure 7 est un exemple de disposition en matrice des cellules actives positives et négatives, selon un autre mode de réalisation ;
- la figure 8 est un exemple de disposition en matrice des cellules actives positives et négatives, selon un autre mode de réalisation ;
- la figure 9 est une représentation schématique d'un système de détection deux axes selon un mode de réalisation ;
- la figure 10 est un exemple de disposition en matrice des capteurs MEMS d'un système de détection deux axes, selon un autre mode de réalisation.

### Description des modes de réalisation

Pour qu'un capteur MEMS soit adapté à la détection ou la mesure de vibration, par exemple pour des fréquences pouvant atteindre 20kHz (bande passante), il est classiquement nécessaire que la fréquence de résonnance*fᵣₑₛ* du capteur MEMS soit supérieure à cette bande passante.

Dans les accéléromètres capacitifs MEMS, la relation entre le déplacement *Δx* de la masse *m* sous une accélération *a* est donnée par l'équation suivante : $Δx / a = 1 / {\left(2{πf}_{res}\right)}^{2} .$

Ainsi, comparativement à des accéléromètres classiques ayant une fréquence de résonance de 2kHz, un accéléromètre avec une fréquence de résonance de 20kHz aura une sensibilité mécanique à l'accélération réduite d'un rapport 100.

Afin de conserver un bon rapport signal sur bruit de la tension de détection *V*, exprimé en variation de tension par rapport à l'accélération appliquée (*ΔV*/*a*), il est donc nécessaire de maximiser à la fois la variation capacitive *ΔC* lors d'un déplacement *Δx* de la masse *m* ainsi que la variation de tension *ΔV* associée à une variation capacitive *ΔC :* $ΔV / a = \left(Δx/a\right) . \left(ΔC/Δx\right) . \left(ΔV/ΔC\right) = 1 / {\left(2{πf}_{res}\right)}^{2} . \left(ΔC/Δx\right) . \left(ΔV/ΔC\right) .$

Ainsi, pour obtenir une variation de capacité la plus élevée possible selon le déplacement appliqué (*ΔC*/*Δx*), il est proposé de réaliser un capteur MEMS à peignes capacitifs interdigités réalisés dans un substrat, exempt de masse d'épreuve spécifique dédiée, les masses propres des doigts mobiles jouant le rôle de masse d'épreuve.

En outre, pour obtenir une variation de tension la plus élevée possible selon la variation de capacité (ΔV/ΔC), il est proposé de réaliser un capteur MEMS présentant un offset capacitif au repos le plus réduit possible, ce qui permet de maximiser le gain du convertisseur électronique capacité/tension. Pour ce faire, le capteur MEMS est formé de différentes cellules de peignes interdigités, agencées en réseau ou matrice. Cette configuration maximise la surface de détection et donc la capacité de détection du capteur, tout en compensant l'offset capacitif introduit notamment par les variations dimensionnelles dues au process de fabrication.

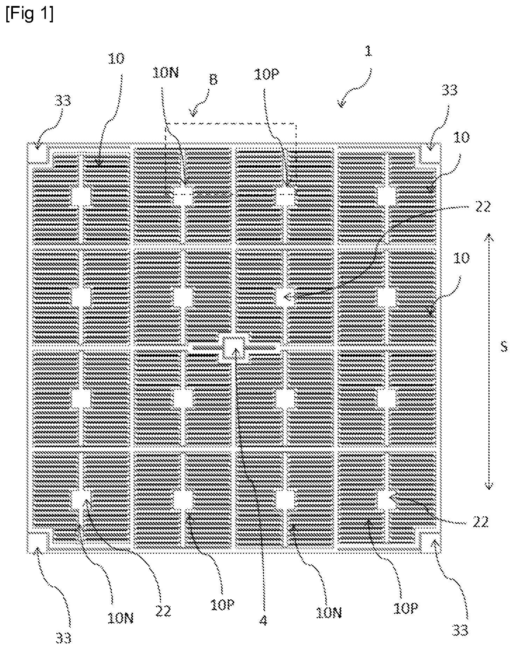

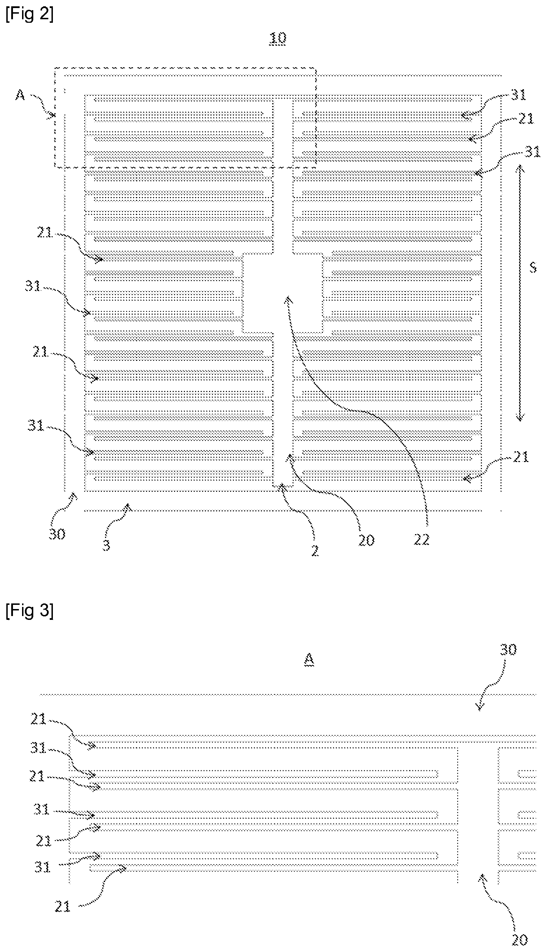

Sur la figure 1 est représenté schématiquement un exemple de capteur MEMS pour la mesure de déplacement par mesure capacitive différentielle selon un mode de réalisation de l'invention. Ce capteur MEMS est formé d'une matrice **1** de cellules capacitives actives **10** réparties dans un plan actif (généralement le plan principal du substrat ou wafer dans lequel le dispositif MEMS est fabriqué) parallèle à un axe sensible **S** de détection prédéfini du capteur. Le capteur MEMS de la figure 1 comprend notamment 16 cellules actives. Comme indiqué sur la figure 2, chaque cellule active **10** est exempte de masse d'épreuve spécifique et est simplement formée d'un peigne fixe **2** et d'un peigne mobile 3 dont les doigts **21, 31** sont interdigités entre eux.

Comme illustré aux figures 2 et 3, chaque cellule active **10** est formée d'un cadre **30** dans le plan actif et d'une poutre centrale **20** positionnée dans le cadre **30** et s'étendant dans la direction de l'axe sensible **S.** Le cadre **30** porte les doigts **31** du peigne mobile **3,** et la poutre centrale **20** porte les doigts **21** du peigne fixe **2.** Les doigts **31** du peigne mobile **3,** que l'on nommera par la suite « doigts mobiles », s'étendent des deux parties latérales du cadre **30,** vers l'intérieur du cadre **30** et perpendiculairement à l'axe sensible **S.** Les doigts **21** du peigne fixe **2,** que l'on nommera par la suite « doigts fixes », s'étendent latéralement de part et d'autre de la poutre centrale **20.** La poutre centrale **20** est fixe et est notamment solidaire, par l'intermédiaire de la zone d'ancrage **22,** des déplacements suivant l'axe sensible **S** (par exemple orienté parallèlement à un axe **X** d'un référentiel galiléen), subis par le corps auquel le capteur MEMS est rapporté, tandis que le cadre **30** est libre et donc au repos par rapport au référentiel galiléen. En d'autres termes, le cadre **30** est destiné à être mobile par rapport à la poutre centrale **20.**

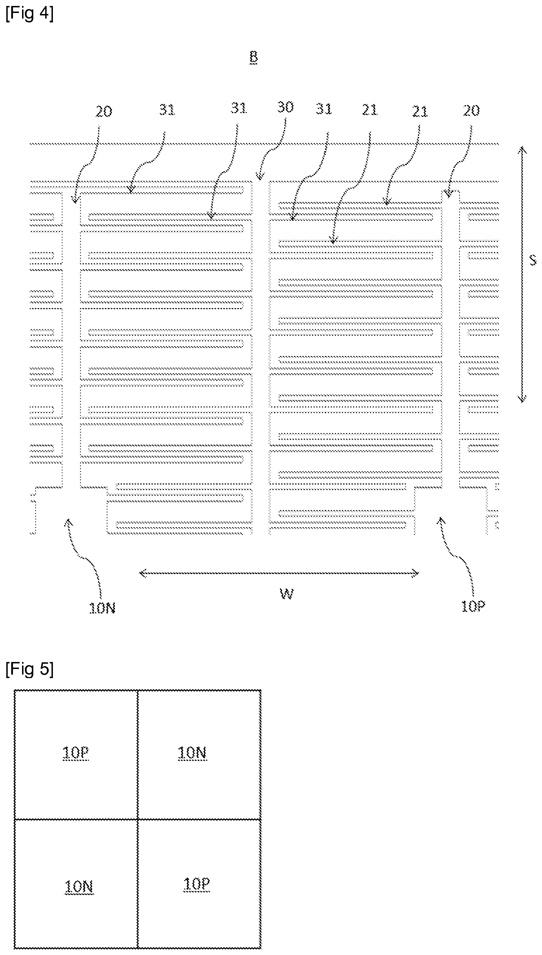

Pour optimiser la surface occupée par les supports (cadres et poutres) des doigts, chaque cellule active a de préférence une partie latérale du cadre mobile commune avec les cellules actives adjacentes. En particulier, comme illustré sur la figure 4 montrant une partie commune entre deux cellules actives **10N, 10P** adjacentes suivant l'axe **W** perpendiculaire à l'axe sensible **S,** les doigts mobiles des deux cellules actives **10P, 10N** adjacentes s'étendent avantageusement d'une même partie latérale du cadre mobile. La disposition des doigts fixes et des doigts mobiles de part et d'autre de la poutre centrale peut être symétrique par rapport à l'axe central de la poutre, sans toutefois être une condition indispensable. De même, deux cellules actives **10N, 10P** adjacentes suivant l'axe **S** partagent une même portion de cadre **30.**

En pratique, pour permettre la réalisation de mesures capacitives différentielles, les cellules actives **10** de la matrice sont configurées de sorte que, lors d'un déplacement des peignes mobiles suivant l'axe sensible **S :**
- dans certaines des cellules capacitives actives, les doigts mobiles s'éloignent des doigts fixes dans la direction de déplacement ; et
- dans certaines autres cellules capacitives actives, les doigts mobiles se rapprochent des doigts fixes dans la même direction de déplacement, et dans les mêmes proportions.

Ainsi, la matrice **1** de cellules actives **10** comprend des cellules actives dites positives **10P** et des cellules actives dites négatives **10N.** On entend par cellule active positive **10P,** une cellule active pour laquelle les doigts sont utilisés en tant qu'électrodes positives pour la mesure capacitive différentielle, et par cellule active négative **10N,** une cellule active pour laquelle les doigts sont utilisés en tant qu'électrodes négatives pour la mesure capacitive différentielle. En pratique, lors d'un déplacement du corps auquel le capteur MEMS est rapporté, tous les peignes mobiles **3** des cellules capacitives actives **10P** et **10N** se déplacent simultanément dans une même direction sensiblement parallèle à l'axe sensible **S.** En réponse à ce déplacement, une première valeur capacitive C1 inter-doigts peut être mesurée via les cellules capacitives positives et une deuxième valeur capacitive C2 inter-doigts peut être mesurée via les cellules capacitives négatives. En pratique, quand la masse mobile est soumise à une accélération qui génère un déplacement selon l'axe sensible **S,** la première valeur capacitive C1 est différente de la deuxième valeur capacitive C2, et la différence entre ces valeurs capacitives C1 et C2 est représentative du déplacement de la masse mobile.

Par ailleurs, afin de réduire l'impact de l'offset capacitif au repos induit notamment par les variations dimensionnelles résultant des déformations du wafer lors du process, les cellules actives positives **10P** et négatives **10N** sont réparties en une matrice centrosymétrique, avec autant de cellules actives positives et négatives sur les lignes de la matrice que sur les colonnes de la matrice, et ce en nombre pair. Ainsi, les cellules actives sont réparties sous la forme d'une matrice carrée d'ordre *M*, avec *M* un nombre pair, et cette matrice *MxM* contiendra autant de cellules actives positives **10P** que de cellules actives négatives **10N,** avec i=M², *i* étant le nombre total de cellules actives (positives et négatives).

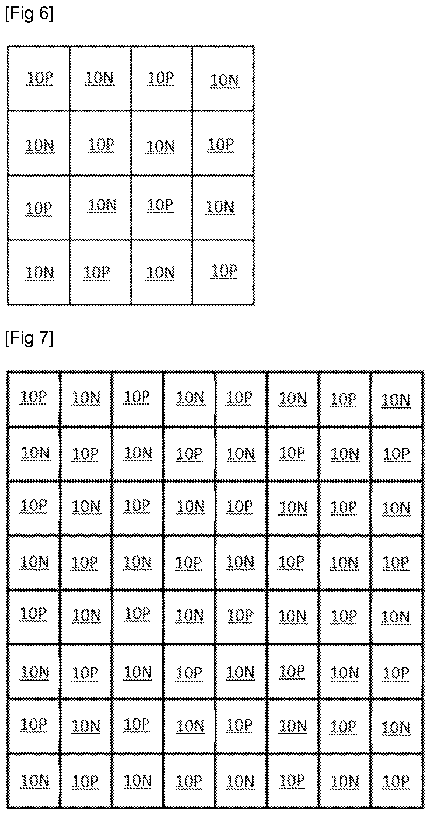

Trois exemples de configurations sont présentés sur les figures 5 à 7, respectivement 2x2, 4x4 et 8x8, et dans lesquels les matrices comprennent une alternance de cellules actives positives **10P** et négatives **10N.**

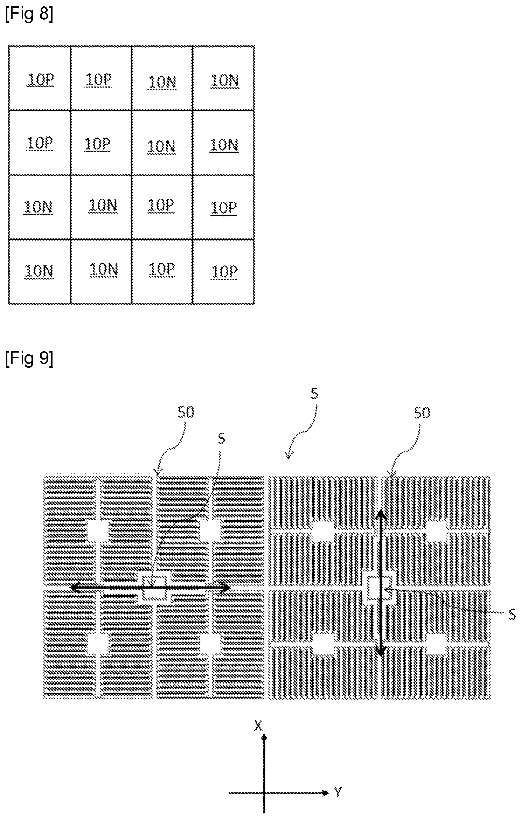

Dans une autre variante, il est possible d'envisager une configuration dans laquelle des groupes de cellules actives positives sont disposés en alternance avec des groupes de cellules actives négatives. En d'autres termes, la matrice contiendrait des sous-matrices de *lxl* cellules actives positives et des sous-matrices de *lxl* cellules actives négatives, *l* étant un nombre pair. Chacune des sous-matrices est formée de cellules actives de même type, à savoir cellule positive ou cellule négative. Ainsi, chaque sous-matrice de cellules actives positives est formée de *l*² cellules actives positives et chaque sous-matrice de cellules actives négatives est formée de *l*² cellules actives négatives. Un exemple illustrant cette configuration est présenté à la figure 8. La matrice 4x4 est formée de sous-matrices 2x2.

Des moyens d'ancrage reliant la structure **1** à un bâti peuvent être prévus pour empêcher le déplacement de la structure **1** hors du plan actif, ainsi que pour assurer le déplacement des peignes mobiles suivant l'axe sensible **S** et l'immobilité des peignes fixes dans le plan actif.

Par exemple, la structure **1** peut comprendre un ancrage central **4** (figure 1) relié au bâti et configuré pour éviter tout déplacement de la structure hors du plan actif. Des points d'ancrage **33** disposés à des coins stratégiques de la structure et couplés au cadre mobile via des microstructures flexibles, telles que des ressorts ou des microstructures en serpentin, peuvent également être prévus pour assurer la sensibilité des peignes mobiles au déplacement suivant l'axe sensible **S.**

Par ailleurs, chaque poutre centrale **20** peut être maintenue immobile dans le plan actif au moyen d'un ou de plusieurs autres points d'ancrage, par exemple au niveau du centre de la poutre **20** (figure 2). La poutre centrale **20** qui fait office de support pour les doigts fixes **21** peut se présenter globalement sous la forme d'un corps allongé s'étendant parallèlement à l'axe sensible **S** et relié au bâti en son centre via une zone d'ancrage **22.** La surface de cette zone d'ancrage **22** n'excède de préférence pas 50% de la surface totale de la poutre centrale. Ainsi, dans cette configuration, les doigts fixes d'une cellule active peuvent avoir des longueurs (suivant l'axe **W)** et des largeurs (suivant l'axe **S)** légèrement différentes.

Avantageusement, les éléments de la structure sont dimensionnés pour éviter les modes de fonctionnement non souhaités, et pour permettre aux masses propres des peignes mobiles de faire office de masse d'épreuve.

Dans le capteur MEMS de l'invention, la partie mobile sensible est formée par l'ensemble cadre et doigts mobiles, tandis que dans les accéléromètres MEMS de l'art antérieur configurés pour une mesure capacitive différentielle, la partie mobile sensible est formée par l'ensemble masse d'épreuve et doigts mobiles. Dans l'invention, la surface des doigts mobiles peut représenter la moitié de la surface totale de la partie mobile sensible, tandis qu'elle ne représente typiquement qu'un quart dans les accéléromètres MEMS de l'art antérieur.

A titre d'exemple, les dimensionnements suivants peuvent être considérés :
Pour chaque cellule active, la largeur de la poutre centrale portant les doigts fixes peut être sensiblement égale à la largeur des portions du cadre portant les électrodes mobiles. Cette homogénéité dimensionnelle améliore l'homogénéité de la gravure du silicium, réduisant ainsi l'offset capacitif. En pratique, cette largeur est avantageusement inférieure ou égale à 20µm, par exemple égale à 20µm, afin de minimiser la surface tout en repoussant les modes parasites au-delà de 20kHz.

La largeur des doigts ainsi que l'espacement entre les doigts, sont avantageusement fixées à la plus petite dimension possible autorisée par la technologie MEMS, classiquement de l'ordre de 3µm pour une épaisseur de 60µm.

Le rapport de la largeur de la poutre centrale ou du cadre sur la largeur d'un doigt fixe ou mobile peut être inférieur à 10 afin de maximiser la surface de détection. Pour les systèmes MEMS de l'art antérieur, le rapport largeur de la masse sismique sur largeur des doigts mobiles est généralement supérieur à 20.

Pour chaque cellule active, le rapport entre la surface occupée par le cadre mobile supportant les doigts mobiles et la surface active totale de la cellule peut être inférieur à 25%, par exemple égal à 10% si on ne tient compte que de la moitié de la largeur des parties du cadre qui sont mutualisées avec les autres cellules adjacentes.

Pour chaque cellule active, le rapport entre la surface occupée par les doigts fixe et mobiles, et la surface active totale de la cellule peut être supérieur à 20%, par exemple égal à 23%.

Pour chaque cellule active, le rapport entre la surface occupée par la poutre centrale supportant les doigts fixes et la surface active totale de la cellule peut être inférieur à 10%, par exemple égal à 5% sans prendre en compte l'ancrage central, ou égal à 7% en prenant en compte l'ancrage central.

De préférence, on privilégiera un nombre de points d'ancrage le plus faible possible qui permet néanmoins d'assurer l'immobilité de la structure hors du plan actif, tout en autorisant la sensibilité des peignes mobiles aux déplacements suivant l'axe sensible S, de manière à éviter au maximum l'apparition de modes de fonctionnement non souhaités. Les parties formant le cadre sont de préférence les plus fines possibles en termes de largeur, mais assez robuste pour repousser les modes non souhaités.

La structure du capteur MEMS décrit ci-avant permet ainsi de réaliser un système de détection sensible deux axes.

Par exemple, comme illustré sur la figure 9, deux capteurs MEMS **50** de détection de vibration suivant un axe sensible **S** peuvent être disposés côte à côte, les axes sensibles **S** de chacun des capteurs **50** sont orientés de manière à former un système de détection **5** sensible deux axes, par exemple adapté pour la détection suivant deux axes orthogonaux **X** et **Y** d'un repère galiléen. Dans l'exemple illustré à la figure 9, l'axe sensible **S** de l'un des capteurs MEMS de détection **50** est orienté parallèlement à l'axe **X** du référentiel, et l'axe sensible S de l'autre capteur MEMS de détection **50** est orienté parallèlement à l'axe **Y** du référentiel. Bien entendu, le système de détection **5** peut comprendre plusieurs capteurs MEMS de détection **50** dont les axes sensibles **S** sont orientés parallèlement à l'un des axes **X** du référentiel, et plusieurs capteur MEMS de détection **50** dont les axes sensibles **S** sont orientés parallèlement à l'autre axe **Y** du référentiel.

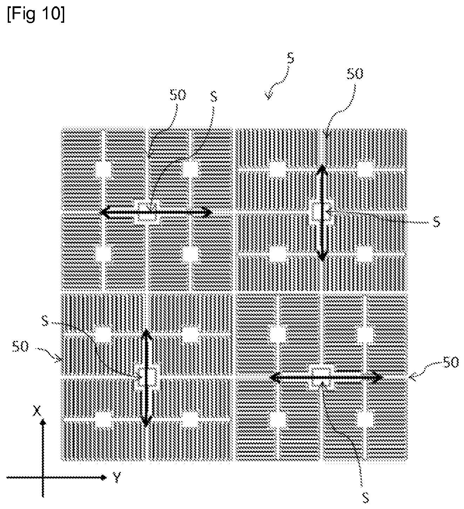

Par ailleurs, sur le même principe de répartition en matrice explicité ci-avant, les différents capteurs MEMS de détection **50** du système peuvent être répartis en matrice et/ou en sous-matrices sur une puce, et deux capteurs MEMS **50** adjacents peuvent avoir une portion de cadre **30** en commun. Un exemple de répartition en matrice 4x4 des capteurs MEMS de détection **50** est illustré à la figure 10. Dans cet exemple, le système **5** est formé d'une alternance de capteurs MEMS **50** d'axe sensible **S** suivant l'axe **X** et de capteurs MEMS **50** d'axe sensible **S** suivant l'axe **Y.**

## Revendications

1. Dispositif micro-électromécanique MEMS de détection de vibration suivant un axe sensible (S), par mesure capacitive différentielle,
- le dispositif MEMS comprenant une matrice (1) de cellules actives (10) réparties dans un plan actif parallèle à l'axe sensible (S),
- ladite matrice (1) étant formée d'un nombre *i* de cellules actives dites positives (10P) et d'un nombre *i* de cellules actives dites négatives (10N), *i* étant un nombre pair,
- chacune des cellules actives positives et négatives (10P, 10N) étant formée d'au moins un peigne mobile (3) et d'au moins un peigne fixe (2), les doigts (21) du peigne fixe (2) et les doigts (31) du peigne mobile (3) formant respectivement des électrodes fixes et mobiles, s'étendant dans le plan actif perpendiculairement à l'axe sensible (S) et étant interdigités,
- les peignes mobiles (3) de toutes les cellules actives positives et négatives (10P, 10N) se déplaçant simultanément dans une même direction sensiblement parallèle à l'axe sensible (S) en réponse à un déplacement appliqué au dispositif MEMS, induisant une première valeur capacitive entre des électrodes fixes et mobiles adjacentes dans chaque cellule active positive (10P), et une deuxième valeur capacitive entre des électrodes fixes et mobiles adjacentes dans chaque cellule active négative (10N), la différence entre la première et la deuxième valeurs capacitives étant représentative du déplacement appliqué au dispositif MEMS ;
- chaque cellule active positive et négative (10P, 10N) comprenant une poutre centrale (20) fixe s'étendant dans la direction de l'axe sensible (S), et positionnée dans un cadre (30) mobile par rapport à la poutre centrale (20), les doigts (21) du peigne fixe (2) s'étendant latéralement de part et d'autre de cette poutre centrale (2), et les doigts (31) du peigne mobile s'étendant du cadre mobile (30) ; et **caractérisé en ce que**
- les doigts (31) des peignes mobiles (3) de deux cellules actives (10) adjacentes suivant un axe (W) qui s'étend dans le plan actif et qui est perpendiculaire à l'axe sensible (S), s'étendant d'une même partie latérale du cadre mobile (30).

2. Dispositif MEMS selon la revendication 1, dans lequel les cellules actives positives et négatives (10P, 10N) sont réparties en une matrice de *jxj* cellules actives, *j* étant un nombre pair, et il y a autant de cellules actives positives et négatives (10P, 10N) sur les lignes de la matrice et sur les colonnes de ladite matrice.

3. Dispositif MEMS selon la revendication 2, dans lequel les lignes et les colonnes de la matrice présentent une alternance de cellules actives positives (10P) et de cellules actives négatives (10N).

4. Dispositif MEMS selon la revendication 2, dans lequel les lignes et les colonnes de la matrice présentent une alternance de sous-matrices de *lxl* cellules actives positives (10P) et de sous-matrices de *lxl* cellules actives négatives (10N), *l* étant un nombre pair.

5. Système de détection suivant deux axes d'un référentiel comprenant au moins deux dispositifs MEMS de détection (50) de vibration suivant un axe sensible (S) selon l'une des revendications 1 à 4, l'axe sensible (S) de l'un des dispositifs MEMS de détection (50) étant perpendiculaire à l'axe sensible (S) de l'autre dispositif MEMS de détection (50).

6. Système de détection selon la revendication 5, comprenant une pluralité de dispositifs MEMS de détection (50) de vibration selon l'une des revendications 1 à 4, les axes sensibles (S) d'un premier ensemble de dispositifs MEMS de détection (50) étant positionnés perpendiculairement aux axes sensibles (S) d'un deuxième ensemble de dispositifs MEMS de détection (50).

7. Système de détection selon la revendication 6, dans lequel la pluralité de dispositifs MEMS de détection (50) est répartie en matrice et/ou en sous-matrices sur une puce.

## Patentansprüche

1. Mikroelektromechanische MEMS-Vorrichtung zur Detektion von Schwingungen entlang einer Empfindlichkeitsachse (S) mittels kapazitiver Differenzmessung,
- wobei die MEMS-Vorrichtung eine Matrix (1) aus aktiven Zellen (10) umfasst, die in einer aktiven Ebene parallel zur Empfindlichkeitsachse (S) verteilt sind,
- wobei die Matrix (1) aus einer Anzahl *i* sogenannter positiver aktiver Zellen (10P) und einer Anzahl *i* sogenannter negativer aktiver Zellen (10N) besteht, wobei *i* eine gerade Zahl ist,
- wobei jede der positiven und negativen aktiven Zellen (10P, 10N) aus mindestens einem beweglichen Kamm (3) und mindestens einem feststehenden Kamm (2) besteht, wobei die Zähne (21) des feststehenden Kamms (2) und die Zähne (31) des beweglichen Kamms (3) jeweils feststehende und bewegliche Elektroden bilden, die sich in der aktiven Ebene senkrecht zur Empfindlichkeitsachse (S) erstrecken und ineinandergreifen,
- wobei sich die beweglichen Kämme (3) aller positiven und negativen aktiven Zellen (10P, 10N) als Reaktion auf eine auf die MEMS-Vorrichtung ausgeübte Verschiebung gleichzeitig in dieselbe Richtung bewegen, die im Wesentlichen parallel zur Empfindlichkeitsachse (S) verläuft, wobei in jeder positiven aktiven Zelle (10P) ein erster Kapazitätswert zwischen benachbarten festen und beweglichen Elektroden und in jeder negativen aktiven Zelle (10N) ein zweiter Kapazitätswert zwischen benachbarten festen und beweglichen Elektroden erzeugt wird, wobei die Differenz zwischen dem ersten und dem zweiten Kapazitätswert repräsentativ für die auf die MEMS-Vorrichtung ausgeübte Verschiebung ist;
- wobei jede aktive positive und negative Zelle (10P, 10N) einen feststehenden zentralen Träger (20) umfasst, der sich in Richtung der Empfindlichkeitsachse (S) erstreckt und in einem Rahmen (30) positioniert ist, der gegenüber dem zentralen Träger (20) beweglich ist, wobei sich die Zähne (21) des feststehenden Kamms (2) seitlich zu beiden Seiten dieses zentralen Trägers (2) erstrecken und sich die Zähne (31) des beweglichen Kamms vom beweglichen Rahmen (30) aus erstrecken; und **dadurch gekennzeichnet, dass**
- die Zähne (31) der beweglichen Kämme (3) zweier benachbarter aktiver Zellen (10) entlang einer Achse (W), die sich in der aktiven Ebene erstreckt und senkrecht zur Empfindlichkeitsachse (S) verläuft, von einem gemeinsamen seitlichen Abschnitt des beweglichen Rahmens (30) ausgehen.

2. MEMS-Vorrichtung nach Anspruch 1, wobei die positiven und negativen aktiven Zellen (10P, 10N) in einer Matrix aus *jxj* aktiven Zellen verteilt sind, wobei *j* eine gerade Zahl ist, und wobei sich in den Zeilen der Matrix und in den Spalten der Matrix jeweils die gleiche Anzahl positiver und negativer aktiver Zellen (10P, 10N) befindet.

3. MEMS-Vorrichtung nach Anspruch 2, wobei die Zeilen und die Spalten der Matrix abwechselnd positive aktive Zellen (10P) und negative aktive Zellen (10N) aufweisen.

4. MEMS-Vorrichtung nach Anspruch 2, wobei die Zeilen und die Spalten der Matrix abwechselnd Untermatrizen aus *lxl* positiven aktiven Zellen (10P) und Untermatrizen aus *lxl* negativen aktiven Zellen (10N) aufweisen, wobei *l* eine gerade Zahl ist.

5. Detektionssystem entlang zweier Achsen eines Koordinatensystems, das mindestens zwei MEMS-Schwingungsdetektionsvorrichtungen (50) entlang einer Empfindlichkeitsachse (S) nach einem der Ansprüche 1 bis 4 umfasst, wobei die Empfindlichkeitsachse (S) der einen MEMS-Detektionsvorrichtung (50) senkrecht zur Empfindlichkeitsachse (S) der anderen Detektionsvorrichtung (50) angeordnet ist.

6. Detektionssystem nach Anspruch 5, umfassend eine Vielzahl von MEMS-Schwingungsdetektionsvorrichtungen (50) nach einem der Ansprüche 1 bis 4, wobei die Empfindlichkeitsachsen (S) einer ersten Gruppe von MEMS-Schwingungsdetektionsvorrichtungen (50) senkrecht zu den Empfindlichkeitsachsen (S) einer zweiten Gruppe von MEMS-Schwingungsdetektionsvorrichtungen (50) positioniert sind.

7. Detektionssystem nach Anspruch 6, wobei die Vielzahl von MEMS-Detektionsvorrichtungen (50) in einer Matrix und/oder in Untermatrizen auf einem Chip verteilt ist.

## Claims

1. A microelectromechanical, MEMS, device for detecting vibration along a sensitive axis (S), by differential capacitive measurement,
- the MEMS device comprising a matrix (1) of active cells (10) distributed in an active plane parallel to the sensitive axis (S),
- said matrix (1) being formed of a number *i* of so-called positive active cells (10P) and a number *i* of so-called negative active cells (10N), *i* being an even number,
- each of the positive and negative active cells (10P, 10N) being formed of at least one movable comb (3) and at least one fixed comb (2), the fingers (21) of the fixed comb (2) and the fingers (31) of the movable comb (3) respectively forming fixed and movable electrodes, extending in the active plane perpendicularly to the sensitive axis (S) and being interdigitated,
- the movable combs (3) of all the positive and negative active cells (10P, 10N) moving simultaneously in the same direction substantially parallel to the sensitive axis (S) in response to a movement applied to the MEMS device, inducing a first capacitive value between adjacent fixed and movable electrodes in each positive active cell (10P), and a second capacitive value between adjacent fixed and movable electrodes in each negative active cell (10N), the difference between the first and second capacitive values being representative of the movement applied to the MEMS device;
- each positive and negative active cell (10P, 10N) comprising a fixed central beam (20) extending in the direction of the sensitive axis (S), and positioned in a frame (30) movable relative to the central beam (20), the fingers (21) of the fixed comb (2) extending laterally on either side of this central beam (20), and the fingers (31) of the movable comb extending from the movable frame (30); and **characterised in that**
- the fingers (31) of the movable combs (3) of two adjacent active cells (10) along an axis (W) which extends in the active plane and which is perpendicular to the sensitive axis (S), extending from a same lateral portion of the movable frame (30).

2. The MEMS device according to claim 1, wherein the positive and negative active cells (10P, 10N) are distributed in a matrix of *jxj* active cells, *j* being an even number, and there are as many positive and negative active cells (10P, 10N) on the rows of the matrix and on the columns of said matrix.

3. The MEMS device according to claim 2, wherein the rows and columns of the matrix have an alternation of positive active cells (10P) and negative active cells (10N).

4. The MEMS device according to claim 2, wherein the rows and columns of the matrix have an alternation of sub-matrices of *lxl* positive active cells (10P) and sub-matrices of *lxl* negative active cells (10N), *l* being an even number.

5. A detection system along two axes of a reference frame comprising at least two MEMS devices (50) for detecting vibration along a sensitive axis (S) according to any one of claims 1 to 4, the sensitive axis (S) of one of the MEMS detection devices (50) being perpendicular to the sensitive axis (S) of the other MEMS detection device (50).

6. The detection system according to claim 5, comprising a plurality of MEMS devices (50) for detecting vibration according to any one of claims 1 to 4, the sensitive axes (S) of a first set of MEMS detection devices (50) being positioned perpendicularly to the sensitive axes (S) of a second set of MEMS detection devices (50).

7. The detection system according to claim 6, wherein the plurality of MEMS detection devices (50) is distributed in matrixes and/or sub-matrices on a chip.
